# EUROPÄISCHE PATENTSCHRIFT

(11) **EP 1 758 703 B1**
(45) Veröffentlichungstag und Bekanntmachung des Hinweises auf die Patenterteilung: **21.08.2013**
(21) Anmeldenummer: 05734878.1
(22) Anmeldetag: 24.03.2005
(51) Int. Cl.: B23C 5/22

(54) **WERKZEUG ZUR SPANABTRAGENDEN BEARBEITUNG VON WERKSTÜCKEN**
TOOL FOR MACHINING WORKPIECES BY CHIP REMOVAL
OUTIL D'USINAGE DE PIECES PAR ENLEVEMENT DE COPEAUX

(30) Priorität: 25.06.2004 DE 202004010075 U
(43) Veröffentlichungstag der Anmeldung: 07.03.2007
(73) Patentinhaber: Gühring, Jörg, Dr., 72458 Albstadt (DE)
(72) Erfinder: MATHEIS, Klaus, 88605 Sauldorf/Rast (DE)
(74) Vertreter: Meitinger, Thomas Heinz
(86) Internationale Anmeldenummer: PCT/DE2005/000535
(87) Internationale Veröffentlichungsnummer: WO 2006/000171

(56) Entgegenhaltungen:
- DE-A1- 19 800 440
- DE-B- 1 076 467
- DE-B- 1 143 082
- US-A- 2 989 800
- US-A- 4 506 715
- US-A1- 2003 202 848

## Beschreibung

### Stand der Technik:

Die vorliegende Erfindung betrifft ein Werkzeug zur spanabtragenden Bearbeitung von Werkstücken nach dem Oberbegriff des Anspruchs 1. Ein solches Werkzeug ist beispielweise aus DE 1143082 bekannt.

Werkzeuge zur spanabtragenden Bearbeitung von Werkstücken, insbesondere Fräsköpfe sind regelmäßig mit an ihrem Umfang verteilt angeordneten Schneidmitteln bestückt. Die Schneidmittel sind häufig Schneidplatten aus PKD (polykristallinen Diamanten), Hartmetall oder dergleichen mehr, die an Kassetten befestigt sind, welche ihrerseits in Ausnehmungen am Fräskopf angeordnet sind.

Bei den großen auftretenden Kräften, insbesondere in der industriellen Fertigung, werden die Verbindungen zwischen den Schneidmitteln und dem Werkzeuggrundkörper hohen Belastungen ausgesetzt, wodurch sich Positionsveränderungen der Schneidmittel gegenüber dem Werkzeuggrundkörper und damit einhergehend ein Abweichen von Positionsvorgaben mit entsprechenden Bearbeitungsungenauigkeit ergeben können.

Die Belastungen in den Verbindungen treten einerseits durch große Vorschubgeschwindigkeiten und zähem oder hartem zu bearbeitendem Werkstoff auf, und andererseits durch die hohen Drehzahlen der Werkzeuge. So wirkt beispielsweise bei einer Drehzahl von 30.000 U/min, nur Fliehkraft bedingt, bereits eine Belastung von ca. einer Tonne auf die Verbindung zwischen einer Schneidmittel-Kassette und dem Werkzeuggrundkörper.

### Aufgabe und Vorteile der Erfindung:

Die Aufgabe der vorliegenden Erfindung liegt in der Erhöhung der Betriebssicherheit und Bearbeitungsgenauigkeit für ein Werkzeug der eingangs genannten Art.

Diese Aufgabe wird durch die Merkmale der Ansprüche 1 oder 2 gelöst. Aus den abhängigen Ansprüchen gehen weitere, vorteilhafte Ausführungsformen der Erfindung hervor.

Die Erfindung geht aus von einem Werkzeug zur spanabtragenden Bearbeitung von Werkstücken. Das Werkzeug umfasst einen Werkzeuggrundkörper, der bei der Werkstückbearbeitung rotiert, mit Kassetten, die Schneidmittel aufweisen und mittels Schraubmitteln am Werkzeuggrundkörper befestigt sind. Dabei stützen sich die Schraubmittel mit eine Anschlagfläche aufweisenden Verankerungsmitteln am Werkzeuggrundkörper ab.

Erfindungsgemäß zeichnet sich das Werkzeug dadurch aus, dass die Verankerungsmittel der Schraubmittel radial innenliegend in Bezug auf die Position der Kassette angeordnet sind.

Dadurch ergibt sich insbesondere der Vorteil, dass im Vergleich zu einer Fixierung der Schneidmittel am Grundkörper durch ein Gewinde eine günstigere Kraftverteilung im Befestigungsbereich der Schraubverbindung mit dem Werkzeuggrundkörper realisiert werden kann.

In vorteilhafter Weise sind die Schraubmittel am Werkzeuggrundkörper radial angeordnet. Auch sind dabei erfindungsgemäß die Verankerungsmittel der Schraubmittel radial innenliegend in Bezug auf die Position der Kassette angeordnet. Dies hat den Vorteil, dass vergleichsweise einfache Ausführungsformen von Schraubmitteln verwendet werden können, wie z.B. Schrauben mit einem kopfartig verdickten Bereich, so dass der Schraubenkopf die mit dem Werkzeuggrundkörper zusammenwirkenden Verankerungsmittel ausbildet. Dieser kann selbstverständlich durch den Einsatz weiterer, den Auflagebereich vergrößernder Mittel, wie z.B. Unterlegscheiben und dergleichen mehr in vorteilhafter Weise erweitert werden.

Denkbar sind aber auch Verankerungsmittel die einen speziell an den Auflagebereich des Werkzeuggrundkörpers angepassten kopfartig verdickten Bereich aufweisen. Der kopfartig verdickte Bereich des Schraubmittels muss dazu nicht zwingend eine zylindrische Form aufweisen, er kann beispielsweise auch als gewölbte Platte ausgebildet sein, wobei der Auflagebereich beispielsweise dem Radius einer achsparallelen Ausnehmung im Werkzeuggrundkörper entsprechend geformt ist. Dadurch kann eine optimale Auflage mit rundum nahezu gleichmäßig verteilten Kraftkomponenten zwischen den Auflagebereichen des Schraubmittels und des Werkzeuggrundkörpers realisiert werden. Denkbar sind auch bajonettverschlussartige Verbindungen oder dergleichen mehr.

Zur Aufnahme der Schraubmittel können dazu in radialer Richtung Durchführungen im Werkzeuggrundkörper ausgebildet sein, welche im einfachsten Fall Bohrungen sind.

In einer demgegenüber abgewandelten Ausführungsform können die radial ausgerichteten Durchführungen für die Schraubmittel als axial verlaufende, offene Schlitze ausgebildet sein, die vorteilhafterweise ein stirnseitiges Einschieben der Schraubmittel in axialer Richtung in den Werkzeuggrundkörper ermöglichen. Damit kann gleichzeitig auch eine axiale Positionierung der Schneidkörper ermöglicht werden.

Die schlitzartig ausgebildeten Durchführungen im Werkzeuggrundkörper für die Schraubmittel sind dabei vorteilhafterweise so ausgebildet, dass im Betrieb des Werkzeugs auftretende Kippmomente sich nicht nachteilig auf die Positionierung der Schneidmittel auswirken. Beispielsweise kann dies durch einen ausreichend langen Schlitz erreicht werden, oder durch Vertiefungen im Werkzeuggrundkörper, in denen der kopfartig verdickte Bereich der Schraubmittel versenkt angeordnet werden kann. Denkbar sind auch entsprechend großflächig ausgebildete Auflagebereiche, die ausreichende Abstützungen gegenüber auftretenden Kippmomenten gewährleisten.

Der mit dem Gewinde versehene Bereich der Schraubmittel kann direkt in ein an einer Kassette angeordnetes Gewinde eingreifen und mit diesem zusammenwirken. Es ist aber auch denkbar, dass an dem Gewinde ein weiteres Schraubmittel angreift, wie beispielsweise, im Fall eines Außengewindes, eine Mutter, oder eine weitere Schraube mit einem weiteren Auflagebereich, der dem ersten Auflagebereich entsprechend entgegenwirkt und die Kassette an dem Werkzeuggrundkörper fixiert. Dies kann beispielsweise dann der Fall sein, wenn das Schraubmittel ein Innengewinde aufweist.

Zur Fixierung der Kassette am Werkzeuggrundkörper kann an der Kassette eine Ausnehmung vorgesehen sein, die einen Zugang für die Bedienung des Schraubmittels ermöglicht, so dass dieses in der Kassette eingelassen ist, ohne daraus vorzustehen.

Gemäß der Efrindung kann es auch vorgesehen sein, dass die Kassetten wenigstens zwei Teile umfassen, wobei die wenigstens zwei Kassettenteile jeweils in einer Verschiebefläche, vorzugsweise einer Verschiebeebene gegeneinander verschiebbar sind, und durch Schraubmittel derart am Werkzeuggrundkörper befestigt sind, dass bei angezogenem Schraubmittel eine Kraftkomponente so auf die wenigstens zwei Teile wirkt, dass in der Verschiebefläche an den beiden Kassettenteilen entgegengesetzt wirksame Kraftkomponenten auftreten. Die Spannmittel können dazu beispielsweise als Keilmittel ausgebildet sein, die sich unter Einwirkung der Schraubmittel über ihre in der Verschiebefläche liegenden Keilflächen gegeneinander verschieben und an die Wandung der Ausnehmung pressen.

Dadurch ergibt sich der Vorteil, dass die Kassette noch stabiler am Grundkörper verspannt werden kann, als dies beispielsweise bei einer einstückigen Kassette der Fall wäre.

Vorzugsweise ist dazu an wenigstens einem Kassettenteil eine Anschlagfläche vorgesehen, welche im gespannten Zustand der Spannmittel an einer Wandung einer im Werkzeuggrundkörper ausgebildeten Ausnehmung für die jeweilige Kassette anliegt. Insbesondere sind an diesem wenigstens einen Kassettenteil die Schneidmittel angeordnet. Damit ergibt sich der Vorteil, dass sich die Schneidmittel exakt und eindeutig in umfängliche Richtung positionieren lassen. Der Kopf des Schraubmittels kann dabei grundsätzlich radial außen- oder innenliegend angeordnet sein.

In einer weiters vorteilhaften Ausführungsform kann sich der Querschnitt der Ausnehmungen für die Kassetten in einer Richtung radial nach außen verjüngen. Damit ergibt sich eine weitere Keilform, wobei die Spitze dieses Keils radial nach außen im Grundkörper ausgerichtet ist, so dass auftretende Fliehkräfte eine Verkeilung der Kassette im Werkzeuggrundkörper zur Folge haben und die Keilelemente stets an den Seitenwänden der ihnen zugeordneten Ausnehmungen anliegen.

Grundsätzlich haben die Schraubmittel eine Federwirkung, insbesondere in ihrer axialen Erstreckung, deren Längenausdehnung in Abhängigkeit der drehzahlbedingten Fliehkräfte vorherbestimmbar ist. Somit kann die Positionierung der Schneidmittel unter Berücksichtigung der bei der vorgesehenen Betriebsdrehzahl auftretenden Längenausdehnung der Schraubmittel erfolgen. Das bedeutet, dass die die Schneidmittel tragenden Kassetten bei der Montage des Werkzeugs soweit vorgespannt werden können, dass sie bei der für den Einsatzbereich vorgesehenen Drehzahl die korrekten Bearbeitungsmaße bei der Werkstückbearbeitung erbringen.

### Zeichnungen:

Ein Ausführungsbeispiel der Erfindung ist in den Zeichnungen unter Angabe weiterer Vorteile und Einzelheiten näher erläutert.

Es zeigen:
- Figur 1: einen Ausschnitt aus einer Schnittdarstellung durch ein Werkzeug zur spanabtragenden Bearbeitung von Werkstücken, in dem an einem Werkzeuggrundkörper eine schneidmitteltragende Kassette mittels einem Schraubmittel befestigt ist, und
- Figur 2: einen größeren Ausschnitt aus der der Figur 1 zugrundeliegenden Schnittdarstellung, in unterschiedlichen Ebenen.

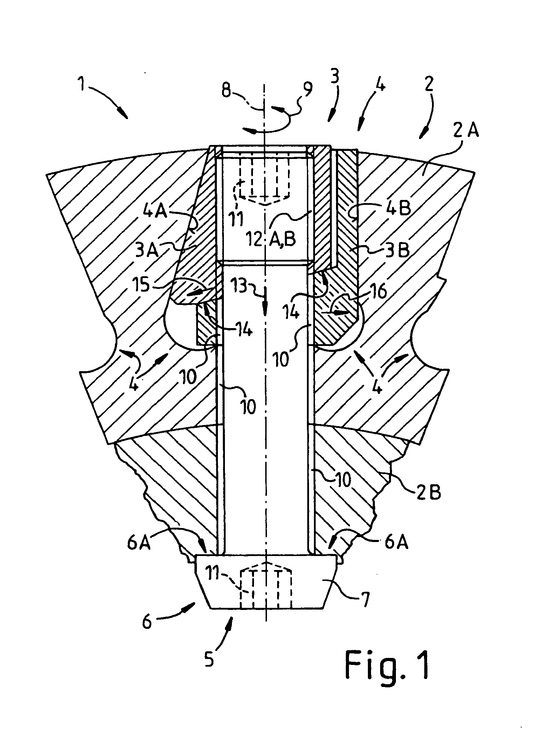

Die Figur 1 zeigt beispielhaft eine mögliche Ausführungsform für die vorliegende Erfindung. Das Werkzeug 1 umfasst dabei einen Werkzeuggrundkörper 2, in welchem eine Schneidmittel aufweisende Kassette 3 in einer für ihre Aufnahme vorgesehenen Kassettenaufnahme 4 angeordnet und mit einem Schraubmittel 5 fixiert ist. Der Werkzeuggrundkörper 2 besteht aus einem radial außen liegend angeordneten Werkzeuggrundkörper-Teil 2A, an dem Kassettenaufnahmen 4 für die Kassetten 3 ausgebildet sind, und aus einem demgegenüber radial innen liegend angeordneten, zweiten Werkzeuggrundkörper-Teil 2B, an dem sich das dargestellte Schraubenmittel 5 mit seiner am Verankerungsmittel 6 ausgebildeten Auflagefläche 6A im angezogenen Zustand des Schraubmittels abstützt. Die Auflagefläche ist dabei am kopfartig verdickten Bereich 7 des Schraubmittels 5 ausgebildet und dem Grundkörper-Teil 2B zugewandt. Das Schraubmittel 5 kann um die Schraubmittelachse 8 in den beiden durch den Pfeil 9 angezeigten Drehrichtungen zum Fixierung bzw. zum Lösen der Kassette 3 gedreht werden.

Die Drehung des Schraubmittels 5 erfolgt in der im Werkzeuggrundkörper 2 angeordneten Ausnehmung 10, und kann über ein Betätigungsmittel, vorliegend einen Innensechskant 11, eingeleitet werden. Der beispielhaft dargestellte Innensechskant kann wahlweise an der Schraubmittel-Stirnseite im radial innenliegenden und/oder im radial außenliegenden Bereich des Werkzeuggrundkörpers angeordnet sein.

Durch Drehen um die Schraubmittelachse 8 wird das Gewinde 12 entsprechend festgezogen bzw. gelöst. Dazu sind am Schraubmittel 5 ein Außengewinde und am Kassettenteil 3A der Kassette 3 ein entsprechendes Innengewinde ausgebildet.

Beim Festziehen des Gewindes 12 wird das Kassettenteil 3A, bezogen auf den Werkzeuggrundkörper 2, in Richtung des Pfeils 13 radial nach innen gezogen. Dabei drückt es an der Verschiebeebene 14 in einem Winkel gegen das zweite Kassettenteil 3B, der zwischen 90° und 180° in Bezug auf die Schraubmittelachse 8 liegt. Durch diesen Winkel ergibt sich eine schräge Auflagefläche, in der die Verschiebeebene 14 liegt, und entlang derer die beiden Kassettenteile 3A, 3B unter der Fixierwirkung des Schraubmittels 5 so gegeneinander verschoben werden, dass sie mit ihren, etwa senkrecht zur Zeichenebene verlaufenden, den Seitenwänden der Kassettenaufnahme 4 zugewandten Außenflächen gegen die entsprechenden Innenflächen der Kassettenaufnahmen 4 gedrückt werden. Die Bewegungsrichtung des Kassettenteiles 3A beim Fixieren der Kassette 3 wird durch den Pfeil 15 dargestellt, und die Bewegungsrichtung des Kassettenteiles 3B durch den Pfeil 16.

Das Schraubmittel 5 kann in diesem Ausführungsbeispiel radial von innen durch die Ausnehmung 10 im Werkzeuggrundkörper 2 nach außen geführt werden. Dabei dringt es mit seinem Gewindeteil nach dem Passieren des Werkzeuggrundkörper-Teils 2B und dem Bodenbereich des Werkzeuggrundkörper-Teils 2A in die Kassettenaufnahme 4 ein. Anschließend wird es durch die auch im Kassettenteil 3B ausgebildete Ausnehmung 10 radial auswärts geführt, und greift schlussendlich in das Außengewinde des Kassettenteiles 3A so weit und lange ein, bis der oben beschriebene Fixiervorgang abgeschlossen ist.

Abgewandelte Ausführungsformen dieser Schraubmittelaufnahme können beispielsweise durch eine schlitzförmig ausgebildete Ausnehmung 10 realisiert werden, wobei der Schlitz an der Stirnseite des Werkzeugs, beispielsweise einem Fräskopf, so mündet, dass das Schraubmittel, gegebenenfalls zusammen mit den beiden Kassettenteilen 3A, 3B von der Stirnseite her in den Fräskopf eingeschoben werden kann.

Es ist aber auch denkbar, dass der Schlitz als rundumlaufend geschlossene Öffnung ausgebildet ist, also dass der Zugang zur Ausnehmung 10 nur radial von außen oder von innen möglich ist. Der Kopf 7 des Schraubmittels 5 kann in einem solchen Ausführungsbeispiel länglich ausgebildet sein, wobei die beiden Längsseiten so dicht aneinander liegen, dass der Kopf 7 von außen durch die schlitzförmige Ausnehmung 10 in den Werkzeuggrundkörper 2 eingeschoben werden kann. Nachdem der Kopf 7 in einem radial innerhalb des Werkzeuggrundkörper-Teils 2B liegenden hohlen Bereich des Werkzeuggrundkörpers 2 angekommen ist, kann er um 90° verdreht werden, so dass eine entsprechende Anordnung vorherrscht, wie sie in der Darstellung der Figur 1 zu sehen ist. Eine solche Ausführungsform ist insbesondere bei Werkzeugen mit vergleichsweise geringen Außendurchmessern denkbar.

Zur Verbesserung der Kräfteübertragung bei der Fixierung der Kassetten 3 durch die Schraubmittel 5 im Werkzeuggrundkörper 2 kann der Werkzeuggrundkörper-Teil 2B aus einem gegenüber dem Werkzeuggrundkörper-Teil 2A widerstandsfähigerem Material gefertigt sein. Dadurch können die über die Auflagefläche 6A vom Schraubmittel 5 auf den Werkzeuggrundkörper-Teil 2B übertragenen Kräfte noch besser aufgenommen werden.

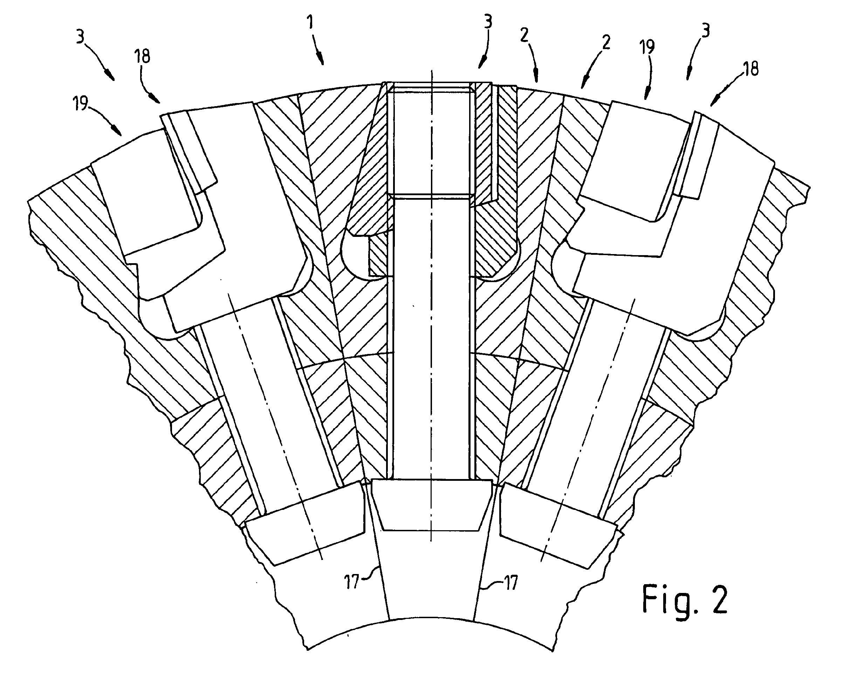

Die Figur 2 zeigt die Anordnung mehrerer Kassetten 3 an einem Werkzeuggrundkörper 2 durch die erfindungsgemäße Kassettenfixierung. Dabei ist lediglich die mittlere Kassette mit dem zugehörigen Schraubmittel 5 und dem diese umgebenden Bereich des Werkzeuggrundkörpers 2 in einer tieferliegenden Schnittebene gezeigt. Die diesen Bereich links und rechts an den Schnittstellen 17 begrenzenden restlichen Elemente der Figur 2 sind in stirnseitiger Ansicht auf einen Fräskopf dargestellt. Die Schneidmittel, beispielsweise in der Form von PKDs, sind dazu mit der Nummer 18 gekennzeichnet, und die Spanabfuhrbereiche mit den Nummern 19.

In dieser Darstellung ist gut erkennbar, dass das Werkzeug 1 mit einer Vielzahl von Kassetten 3 am Umfang des Werkzeuggrundkörpers 2 bestückt ist. Der radial innen liegende Bereich, welcher um die Längsachse des Werkzeugs, also des Fräskopfs, herum ausgebildet ist, ist im vorliegenden Fall über einen Teil seiner axialen Erstreckung hinweg materiallos ausgebildet, also hohl.

Dementsprechend können die Schraubmittel 5 radial von innen nach außen durch die Ausnehmungen 10 in der oben dargestellten Art und Weise eingeführt werden. Die links und rechts des mittleren Bildbereichs dargestellten Kassetten 3 mit den zugehörigen Schraubmittel 5 sind demgegenüber in schlitzförmigen Ausnehmungen 10 angeordnet, wobei die Schlitze zur Stirnseite des Werkzeugs hin geöffnet sind, so dass eine lose zusammengeschraubte Einheit von Kassettenteilen 3A, 3B und Schraubmittel 5 stirnseitig in den Fräskopf eingeschoben und anschließend fixiert werden kann.

### Bezugszeichenliste:

- 1: Werkzeug
- 2: Werkzeuggrundkörper
- 2A: Werkzeuggrundkörper-Teil
- 2B: Werkzeuggrundkörper-Teil
- 3: Kassette
- 3A: Kassettenteil
- 3B: Kassettenteil
- 4: Kassettenaufnahme
- 5: Schraubmittel
- 6: Verankerungsmittel
- 6A: Auflagefläche
- 7: Kopf
- 8: Schraubmittelachse
- 9: Pfeil
- 10: Ausnehmung
- 11: Innensechskant
- 12: Gewinde
- 13: Pfeil
- 14: Verschiebeebene
- 15: Pfeil
- 16: Pfeil
- 17: Schnittstelle
- 18: Schneidmittel
- 19: Spanabfuhrbereich
- 20: Gewindeabschnitt
- 21: Gewindeabschnitt

## Patentansprüche

1. Werkzeug (1) zur spanabtragenden Bearbeitung von Werkstücken, umfassend einen Werkzeuggrundkörper (2), der bei der Werkstückbearbeitung rotiert, mit Kassetten (3), die Schneidmittel aufweisen und mittels Schraubmitteln (5) am Werkzeuggrundkörper (2) befestigt sind, wobei sich die Schraubmittel (5) mit eine Anschlagfläche (6A) aufweisenden Verankerungsmitteln (6) am Werkzeuggrundkörper (2) abstützen, **dadurch gekennzeichnet, dass** die Verankerungsmittel (6) der Schraubmittel (5) radial innenliegend in Bezug auf die Position der Kassette (3) angeordnet sind.

2. Werkzeug nach dem Oberbegriff des Anspruchs 1, insbesondere nach Anspruch 1, **dadurch gekennzeichnet, dass** die Kassetten (3) wenigstens zwei Teile umfassen, wobei die wenigstens zwei Kassettenteile (3A, 3B) jeweils an einer Verschiebefläche (14) gegeneinander verschiebbar sind, und durch die Schraubmittel (5) derart am Werkzeuggrundkörper (2) befestigt sind, dass bei angezogenem Schraubmittel (5) eine Kraftkomponente so auf die wenigstens zwei Kassettenteile (3A, 3B) wirkt, dass in der Verschiebefläche (14) an den beiden Kassettenteilen (3A, 3B) entgegengesetzt wirksame Kraftkomponenten auftreten.

3. Werkzeug nach Anspruch 1 oder 2, **dadurch gekennzeichnet, dass** die Schraubmittel (5) am Werkzeuggrundkörper (2) radial angeordnet sind.

4. Werkzeug nach einem der vorhergehenden Ansprüche, **dadurch gekennzeichnet, dass** die Verankerungsmittel (6) einen kopfartig verdickten Bereich (7) der Schraubmittel (5) umfassen.

5. Werkzeug nach einem der vorhergehenden Ansprüche, **dadurch gekennzeichnet, dass** die Schraubmittel (5) in radialer Richtung in den Werkzeuggrundkörper (2) einschiebbar sind.

6. Werkzeug nach einem der vorhergehenden Ansprüche, **dadurch gekennzeichnet, dass** die Schraubmittel (5) in axialer Richtung in den Werkzeuggrundkörper (2) einschiebbar sind.

7. Werkzeug nach einem der vorhergehenden Ansprüche, **dadurch gekennzeichnet, dass** die Schraubmittel (5) zu ihrer Bedienung über eine Ausnehmung in der Kassette (3) zugänglich sind.

8. Werkzeug nach einem der vorhergehenden Ansprüche 2 bis 7, **dadurch gekennzeichnet, dass** an wenigstens einem Kassettenteil (3A, 3B) eine Anschlagfläche vorgesehen ist, welche im gespannten Zustand der Schraubmittel an einer Wandung einer im Werkzeuggrundkörper (2) ausgebildeten Ausnehmung (4) für die jeweilige Kassette (3) anliegt.

9. Werkzeug nach einem der vorhergehenden Ansprüche, **dadurch gekennzeichnet, dass** der Querschnitt der Ausnehmungen (4) für die Kassetten (3) sich in einer Richtung radial nach außen verjüngt.

## Claims

1. Tool (1) for machining of workpieces, comprising a tool body (2), which is rotating during machining of workpieces, with insert cartridges (3) which comprise means of cutting and which are attached to the tool body by screwing devices (5), wherein the screwing devices (5) are supported against the tool body by means of fixture (6) having a stop face (6A), **characterized by** the means of fixture (6) of the screwing devices (5) being located radially inwards with respect to the position of the insert cartridge (3).

2. Tool according to the preamble of claim 1, particularly according to claim 1, **characterized by** the insert cartridges (3) comprising at least two parts, wherein the at least two insert cartridge parts (3A, 3B) are each slideable against each other on a slide plane (14), and are attached to the tool body (2) by the screwing devices (5) in such a way, that, when the screwing devices (5) are tightened, a force component acts in such a way on the at least two insert cartridge parts (3A, 3B), that in the slide plane force components opposed to each other result on the two cartridge insert parts (3A, 3B).

3. Tool according to claim 1 or 2, **characterized by** the screwing devices (5) being arranged radially on the tool body (2).

4. Tool according to any one of the preceding claims, **characterized by** the means of fixture (6) comprising a head-like thickened area (7) of the screwing devices (5).

5. Tool according to any one of the preceding claims, **characterized by** the screwing devices (5) being insertable in radial direction into the tool body (2).

6. Tool according to any one of the preceding claims, **characterized by** the screwing devices (5) being insertable in axial direction into the tool body (2).

7. Tool according to any one of the preceding claims, **characterized by** the screwing devices (5) being accessible for their operation through a recess in the cartridge insert (3).

8. Tool according to any one of the preceding claims 2 to 7, **characterized by** a stop face being provided on at least one cartridge insert part (3A, 3B), which in tightened state of the screwing devices is resting on a wall of a recess (4) formed in the tool body (2) for the respective cartridge insert (3).

9. Tool according to any one of the preceding claims, **characterized by** the cross section of the recesses (4) for the cartridge inserts (3) being narrowed in a radially outwards direction.

## Revendications

1. Outil (1) pour l'usinage par enlèvement de coupeaux de pièce à travailler, comprenant un corps de base d'outil (2), lequel tourne lors de l'usinage de la pièce, comprenant des cassettes (3), qui présentent des moyens de coupe et sont fixées à l'aide de moyens de vissage (5) sur le corps de base d'outil (2), les moyens de vissage (5) s'appuyant sur le corps de base d'outil (2) avec des moyens d'ancrage (6) présentant une surface de butée (6A), **caractérisé en ce que** les moyens d'ancrage (6) des moyens de vissage (5) sont disposés radialement à l'intérieur par rapport à la position de la cassette (3).

2. Outil selon le préambule de la revendication 1, en particulier selon la revendication 1, **caractérisé en ce que** les cassettes (3) comprennent au moins deux parties, les au moins deux parties de cassette (3A, 3B) pouvant coulisser à chaque fois sur une surface de coulissement (14) l'une par rapport à l'autre, et étant fixées par les moyens de vissage (5) sur le corps de base d'outil (2) de telle sorte que, lorsque le moyen de vissage (5) est serré, une composante de force agit sur les au moins deux parties de cassette (3A, 3B) de telle sorte que des composantes de force efficaces dans le sens opposé apparaissent dans la surface de coulissement (14) sur les deux parties de cassette (3A, 3B).

3. Outil selon la revendication 1 ou 2, **caractérisé en ce que** les moyens de vissage (5) sont disposés radialement sur le corps de base d'outil (2).

4. Outil selon l'une des revendications précédentes, **caractérisé en ce que** les moyens d'ancrage (6) comprennent une zone (7), épaissie au niveau du sommet, des moyens de vissage (5).

5. Outil selon l'une des revendications précédentes, **caractérisé en ce que** les moyens de vissage (5) peuvent être introduits dans le sens radial dans le corps de base d'outil (2).

6. Outil selon l'une des revendications précédentes, **caractérisé en ce que** les moyens de vissage (5) peuvent être introduits dans le sens axial dans le corps de base d'outil (2).

7. Outil selon l'une des revendications précédentes, **caractérisé en ce que** les moyens de vissage (5) sont accessibles par rapport à leur manipulation au moyen d'un évidement dans la cassette (3).

8. Outil selon l'une des revendications précédentes 2 à 7, **caractérisé en ce que** sur au moins une partie de cassette (3A, 3B) est prévue une surface de butée, qui, lorsque les moyens de vissage sont dans l'état tendu, s'applique sur une paroi d'un évidement (4), formé dans le corps de base d'outil (2), pour la cassette (3) respective.

9. Outil selon l'une des revendications précédentes, **caractérisé en ce que** la section des évidements (4) pour les cassettes (3) se rétrécit dans une direction radialement vers l'extérieur.
